# EUROPEAN PATENT APPLICATION

(11) **EP 2 739 122 A1**
(43) Date of publication of application: **04.06.2014**
(21) Application number: 12876077.4
(22) Date of filing: 18.07.2012
(51) Int. Cl.: H05B 37/00

(54) **LED LIGHTING DEVICE AND LED LIGHTING NETWORK SYSTEM**

(30) Priority: 12.06.2012 CN 201210197051
(71) Applicant: Zhejiang Shenghui Lighting Co., Ltd, Jiaxing, Zhejiang 314501 (CN)
(72) Inventor: RUAN, Jiayang, Jiaxing Zhejiang 314015 (CN); SHEN, Jinxiang, Jiaxing Zhejiang 314015 (CN)
(74) Representative: Chaillot, Geneviève
(86) International application number: PCT/CN2012/078803
(87) International publication number: WO 2013/185403

(57) **Abstract**

The present invention discloses an LED illumination device which includes LED light-emitting element, LED driver circuit and wireless routing module with routing function that receives and transmits wireless signals, wherein the LED driver circuit is connected to the LED light-emitting element and wireless routing module respectively; an LED illumination network system which consists of at least two above mentioned LED illumination device units, each unit transmitting the wireless signals it receives to other units within the reach of its wireless signals. The LED illumination device referred in this invention makes a lamp work also as wireless network router, or wireless hub. Therefore, as long as one lamp receives a signal, the signal will be passed on one after another, extending constantly the covering range of the wireless network, thereby breaking through the limit of transmission distance and penetration capability of wireless signals.

## Description

### FIELD OF THE INVENTION

This invention relates to the technical field of LED illumination, more particularly, to an LED illumination device and illumination network system with wireless routing function.

### BACKGROUND OF THE INVENTION

Intelligent illumination device and system remains to be the research subject for new generation of illumination solutions throughout. Conventional concepts refer to no other than the following:
1. To obtain external conditions by sensor, for instance, photosensor is used to measure ambient brightness so as to turn on / off the lamp automatically.
2. To read the state of lamp by wired network, thereby knowing and controlling lamp switch box of the building thus adjusting the brightness.
3. To control the lamp equipped with wireless receipt and transmission function by wireless signals such as wireless network, thus realizing remote control.

Among the above mentioned control methods, wireless control is growing in popularity among consumers thanks to its facility in application with no additional requirements for lamp installation and wiring. However, conventional wireless control method is restricted by obstacles, transmission distance and transmission power, resulting in limited covering range, thereby restraining its convenience and reliability.

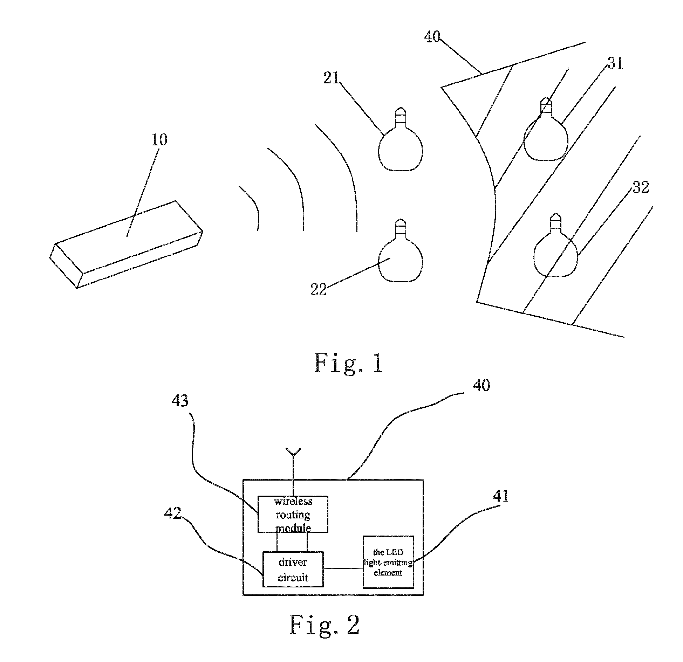

FIG. 1 illustrates the above mentioned conventional illumination system based on wireless control, with an external remote controller 10, wherein LED illumination devices 21 and 22 are covered by its signals while LED illumination devices 31 and 32 stay in no-signal zone 40 out of reach of effective wireless signals due to distance, obstacles, etc. Besides, in the above mentioned wireless control method, the wireless connection between remote controller and LED illumination device is star-like structured, wherein there is no information transmission between one LED illumination device and another, thereof restraining physically the transmission distance of wireless signals.

### SUMMARY OF THE INVENTION

To overcome the defects of the above mentioned prior art, this invention provides an LED lamp with wireless routing function, which can be connected to Internet and LAN either separately or in the manner of Ad hoc network, thus making it easier to know about and remote control the lamp.

The technical scheme of this invention is realized as below:
An LED illumination device, comprising at least one light-emitting element, at least one LED driver circuit, and at least one wireless routing module with routing function that receives and transmits wireless signals, wherein the said LED driver circuit is connected to the light-emitting element and wireless routing module respectively.

Preferably, the said wireless routing module is connected to Internet or LAN through wireless signals.

Preferably, the said wireless routing module is mounted either inside or outside of the LED illumination device shell.

An LED illumination network system, consisting of at least two above mentioned LED illumination device units, each unit transmitting the wireless signals it receives to other units within the reach of its wireless signals. It's possible to receive and transmit wireless signals among LED illumination devices, thus self-forming a net-like structured wireless network, distinguishing from conventional star-like network.

Preferably, the system is connected to Internet or LAN through wireless signals.

Preferably, the system includes also a control terminal for status reading and remote control of the units within this system, wherein the said control terminal is connected to each unit through wireless signals.

Preferably, the said control terminal can be computer, tablet PC or smart phone.

The design philosophy and benefits of this invention by adopting above mentioned technical scheme lie in:
The LED illumination device referred in this invention makes a lamp work also as wireless router, or wireless hub. Therefore, as long as one lamp receives a signal, the signal will be passed on one after another, extending constantly the covering range of the wireless network, thereby breaking through the limit of transmission distance and penetration capability of wireless signals.

Besides, the LED illumination device described in this invention, no matter it's a single lamp body or a lamp consisting of a plurality of lamp bodies, can be connected to Internet and LAN either separately or in the manner of Ad hoc network via wireless network, thus making it easier and prompter to know about and remote control the lamp.

### BRIEF DESCRIPTION OF THE DRAWINGS

FIG. 1 is a schematic diagram of conventional illumination system based on wireless control;
FIG. 2 is a schematic diagram of the LED illumination device referred in this invention;
FIG. 3 is a schematic diagram of the LED illumination network system referred in this invention.

### DETAILED DESCRIPTION OF THE PREFERRED EMBODIMENTS

Detailed description of the preferred embodiments of this invention as below:
Embodiment: LED lamp 40 in this invention comprises an LED light-emitting element 41, an LED driver circuit 42 and a wireless routing module 43, wherein the said wireless routing module 43 and LED driver circuit 42, LED driver circuit 42 and LED light-emitting element 41 are electrically connected. The said wireless routing module 43 can be installed inside the lampshell, while if it's integrated into one circuit board with LED driver circuit 42, it can be mounted to the surface of lampshell, or placed outside the lamp body. The electrical connection between wireless routing module 43 and LED driver circuit 42 is able to detect the state of LED lamp, such as switch status of the lamp and light intensity. In the meanwhile it's also possible to input the signals received by wireless routing module 43 to the control port of LED driver circuit 42, thereof being able to control the state of lamp and adjust the brightness. Furthermore, the wireless routing module sends out PWM signals to the dimming control input terminal of LED driver circuit to realize dimming function.

Additionally, LED illumination device 40 refers not only to single light source such as a single lamp bulb, but also a lamp consisting of a plurality of lamp bulbs, of which the driver circuits can be connected to one same wireless routing module as well, thereof detecting and controlling the state of lamp.

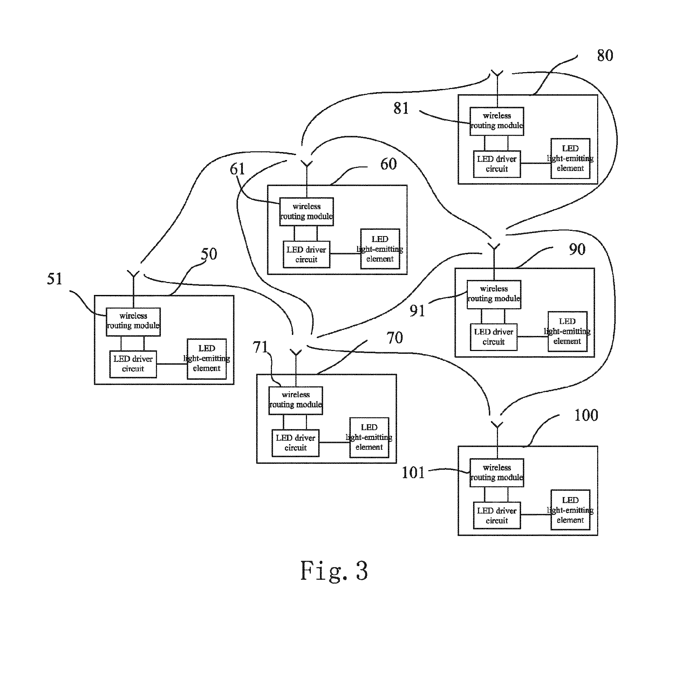

FIG. 3 is a schematic diagram of the LED illumination network system, wherein 50, 60, 70, 80, 90 and 100 refer to the above mentioned LED illumination device. LED lamp 50 is connected to wireless routing module 61, 71 of LED illumination device 60, 70 which are covered by its signals through its wireless routing module 51; LED illumination device 60 and 70 are also connected via wireless network. Meanwhile, LED illumination device 60, 70, as wireless router, connect LED illumination device 50 with distant LED illumination device 80, 90 and 100 respectively, thus forming a bridged network structure, and analogously creating a net-like wireless network. Therefore, the wireless network is extended, breaking through the limit of signal distance and penetration capability of single wireless router. As long as one illumination device receives command, it will be passed on and on to each unit of the whole net-like wireless network, making the wireless control easier in large buildings like office building and shopping mall.

The wireless Ad hoc network of the LED illumination device in this invention can be connected to Internet or LAN, making status detection and remote control possible for customers through the terminal connected to this network. For instance, smart phone can be used to switch on / off the LED illumination device, adjust its brightness, color or hue via particular application.

The operating principle and core of this invention is: breaking through the limit of wireless network covering range by using wireless routing function and Ad hoc network of the LED illumination device; enabling the Ad hoc network to connect to Internet and LAN; electrically connecting control terminal and wireless routing module, to realize remote control and adjustment of lamp state via network.

## Claims

1. An LED illumination device, **characterizing in that** it comprises at least one LED light-emitting element, at least one LED driver circuit, and at least one wireless routing module with routing function that receives and transmits wireless signals, wherein the said LED driver circuit is connected to the LED light-emitting element and wireless routing module respectively.

2. An LED illumination device as set forth in claim 1, **characterizing in that** the said wireless routing module is connected to Internet or LAN through wireless signals.

3. An LED illumination device as set forth in claim 1, **characterizing in that** the said wireless routing module is mounted either inside or outside of the LED lampshell.

4. An LED illumination network system, **characterizing in that** it consists of at least two LED illumination device units as described in claim 1, each unit transmitting the wireless signals it receives to other units within the reach of its wireless signals.

5. An LED illumination network system as set forth in claim 4, **characterizing in that** the system is connected to Internet or LAN through wireless signals.

6. An LED illumination network system as set forth in claim 4, **characterizing in that** it includes also a control terminal for status reading and remote control of the units within this system, wherein the said control terminal is connected to each unit through wireless signals.

7. An LED illumination network system as set forth in claim 6, **characterizing in that** the said control terminal can be computer, tablet PC or smart phone.
